# EUROPEAN PATENT SPECIFICATION

(11) **EP 1 958 375 B1**
(45) Date of publication and mention of the grant of the patent: **25.06.2014**
(21) Application number: 06837211.9
(22) Date of filing: 08.11.2006
(51) Int. Cl.: H04L 12/10

(54) **DYNAMIC POWER ALLOCATION IN SYSTEM FOR PROVIDING POWER OVER COMMUNICATION LINK**
DYNAMISCHE STROMZUTEILUNG IN EINEM SYSTEM ZUR BEREITSTELLUNG VON STROM ÜBER EINE KOMMUNIKATIONSSTRECKE
ATTRIBUTION DYNAMIQUE DE PUISSANCE DANS UN SYSTEME FOURNISSANT DE LA PUISSANCE VIA UNE LIAISON DE COMMUNICATION

(30) Priority: 15.11.2005 US 736328 P
(43) Date of publication of application: 20.08.2008
(73) Proprietor: Linear Technology Corporation, Milpitas, CA 95035-7417 (US)
(72) Inventor: STANFORD, Clayton, Reynolds, Summerland, CA 93067 (US)
(74) Representative: Müller-Boré & Partner Patentanwälte PartG mbB
(86) International application number: PCT/US2006/043583
(87) International publication number: WO 2007/058871

(56) References cited:
- US-B1- 6 473 608
- "Power over Ethernet: Cisco Inline Power and IEEE 802.3af" INTERNET CITATION, [Online] 2004, XP002383688 Retrieved from the Internet: URL:http://www.cisco.com/warp/public/cc/so /neso/bbssp/poeie_wp.pdf> [retrieved on 2006-05-31]

## Description

This application claims priority of provisional U.S. patent application No. 60/736,328 filed on November 15, 2005, and entitled "SYSTEM AND METHOD FOR SUPPORTING ADVANCED POWER OVER ETHERNET SYSTEM."

### Technical Field .

This disclosure relates to power supply systems, and more particularly, to circuitry and methodology for performing dynamic power allocation in a system for providing power over a communication link, such as a Power over Ethernet (PoE) system.

### Background Art

Over the years, Ethernet has become the most commonly used method for local area networking. The IEEE 802.3 group, the originator of the Ethernet standard, has developed an extension to the standard, known as IEEE 802.3af, that defines supplying power over Ethernet cabling. The IEEE 802.3af standard defines a Power over Ethernet (PoE) system that involves delivering power over unshielded twisted-pair wiring from a Power Sourcing Equipment (PSE) to a Powered Device (PD) located at opposite sides of a link. Traditionally, network devices such as IP phones, wireless LAN access points, personal computers and Web cameras have required two connections: one to a LAN and another to a power supply system. The PoE system eliminates the need for additional outlets and wiring to supply

As defined in the IEEE 802.3af standard, PSE and PD are non-data entities allowing network devices to supply and draw power using the same generic cabling as is used for data transmission. A PSE is the equipment electrically specified at the point of the physical connection to the cabling, that provides the power to a link. A PSE is typically associated with an Ethernet switch, router, hub or other network switching equipment or midspan device. A PD is a device that is either drawing power or requesting power. PDs may be associated with such devices as digital IP telephones, wireless network access points, PDA or notebook computer docking stations, cell phone chargers and HVAC thermostats.

The main functions of the PSE are to search the link for a PD requesting power, optionally classify the PD, supply power to the link if a PD is detected, monitor the power on the link, and disconnect power when it is no longer requested or required. A PD participates in the PD detection procedure by presenting a PoE detection signature defined by the IEEE 802.3af standard.

If the detection signature is valid, the PD has an option of presenting a classification signature to the PSE to indicate how much power it will draw when powered up. Based on the determined class of the PD, the PSE applies the required power to the PD.

To make sure that PoE system will operate under worst case conditions, the PD should request power corresponding to its peak power usage. The PSE keeps track of power allocated to all PDs. For the most robust operation, the PSE should reserve the peak power for each PD that it powers up. This power allocation scheme is static. The power is allocated to each PD only once at power-up.

However, power available to support operations of the PDs is limited. PSE will deny request for power from an additional PD if the available power is not sufficient to support its peak power usage. Therefore, it would be desirable to create a flexible power allocation scheme that would be able to support the maximum number of PDs.
"Power over Ethernet" Cisco Inline Power and IEEE 802.3af" (http://www.cisco.com/warp/public/cc/so/neso/bbbssp/poeie-wp.pdf) discloses power management to enable a powered device and PSE to negotiate their respective capabilities to explicitly manage how much power is required to power the device and also how a PSE capable switch manages the allocations of power to individual powered devices.

US6473608 discloses communication cabling connecting a local area network hub to a plurality of nodes. A power supply distributor provides at least some operating power to act least some of the nodes via the communication cabling.

### Summary of the Disclosure

The present disclosure offers a novel system and methodology for supplying power to a powered device over a communication link, such as an Ethernet link. In particular, the system of the present disclosure comprises a power supply device for providing power to a powered device (PD), and a dynamic power allocation mechanism for dynamically modifying power allocated to the PD in accordance with tasks of the PD.

In accordance with one aspect of the disclosure, the power supply device is configured for providing power to the PD over a physical layer of a data network, and the dynamic power allocation mechanism is responsive to information transferred over a link layer of the data network.

The dynamic power allocation mechanism may be configured to reduce power allocated to the PD when the PD switches to a first task associated with a decrease in power consumption, and to increase power allocated to the PD when the PD switches to a second task associated with an increase in power consumption.

The power supply device may be configured to provide power to multiple powered devices (PDs). The dynamic power allocation mechanism may modify power allocated to the PDs based on tasks of the respective PDs. For example, power allocated to each PD may be modified when the respective PD changes a task being performed.

When the dynamic power allocation mechanism reduces or removes power allocated to a first PD, this power may be reallocated to a second PD. For example, the first PD may switch to a task associated with a lower power consumption, whereas the second PD switches to a task associated with a higher power consumption. Also, power may be reallocated from one PD to another if a power shortage is detected.

The system may further comprise a priority mechanism for assigning priorities to the PDs. The dynamic power allocation mechanism may reduce or remove power allocated to a lower-priority PD before reducing or removing power allocated to a higher-priority PD if a power shortage is detected.

Further, power allocated to a lower-priority PD may be reduced or removed to satisfy power demand from a higher-priority PD if a power shortage is detected.

The priority mechanism may dynamically change priorities assigned to the PDs during operations of the PDs, for example, in accordance with their tasks.

A task keeping mechanism may be provided for maintaining information on tasks to be performed by the PD. For example, the task keeping mechanism may maintain information on power and/or current consumption associated with each of the tasks.

In accordance with another aspect of the disclosure, a dynamic current allocation mechanism may be provided to dynamically modify current supplied by the power supply device to the PD in accordance with a current consumption level associated with a task of the PD.

The communication link of the system may be cabling for connecting a network node of a local area network to a hub of the local area network, the hub having the power supply device and the dynamic power allocation mechanism The dynamic power allocation mechanism may be responsive to information transferred over a layer link of the local area network.

In accordance with a method of the disclosure, the following steps are carried out for providing power to a PD over an Ethernet link:
- allocating power to the PD,
- delivering the allocated power to the PD, and
- changing a level of the allocated power when the PD switches from a first task to a second task.

Additional advantages and aspects of the disclosure will become readily apparent to those skilled in the art from the following detailed description, wherein embodiments of the present disclosure are shown and described, simply by way of illustration of the best mode contemplated for practicing the present disclosure. As will be described, the disclosure is capable of other and different embodiments, and its several details are susceptible of modification in various obvious respects, all without departing from the spirit of the disclosure. Accordingly, the drawings and description are to be regarded as illustrative in nature, and not as limitative.

### Brief Description of the Drawings

The following detailed description of the embodiments of the present disclosure can best be understood when read in conjunction with the following drawings, in which the features are not necessarily drawn to scale but rather are drawn as to best illustrate the pertinent features, wherein:
FIG. 1 is a diagram illustrating a PoE system of the present disclosure, and
FIG. 2 is a diagram illustrating a dynamic power allocation mechanism of the present disclosure.

### Detailed Disclosure of the Embodiments

The present disclosure will be made using the example of a power supply device in a PoE system. It will become apparent, however, that the concepts described herein are applicable to any power supply system. For example, the system of the present disclosure may be provided in a local area network (LAN) having a plurality of nodes, a network hub and communication cabling connecting the nodes to the network hub for providing data communications. The network hub may include a power supply device for providing power to a powered device over the communication cabling, and a dynamic power allocation mechanism of the present disclosure.

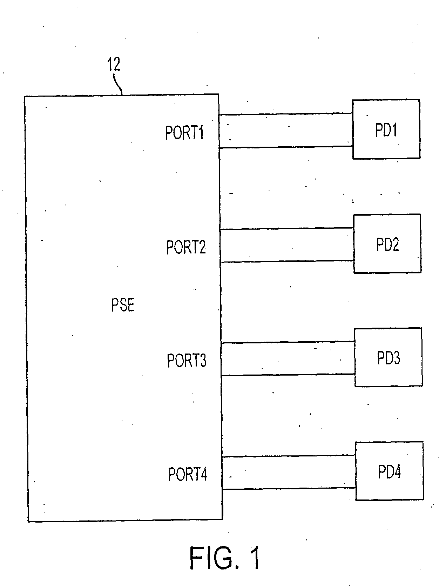

FIG. 1 shows a simplified block-diagram illustrating a Power over Ethernet (PoE) system 10 including Power Sourcing Equipment (PSE) 12 having multiple ports 1 to 4 connectable to Powered Devices (PD1 to PD4) via respective links, each of which may be provided using 2 or 4 sets of twisted pairs within an Ethernet cable. Although FIG. 1 shows four ports of the PSE 12, one skilled in the art would realize that any number of ports may be provided to support power supply to the respective number of PDs.

The PSE 12 may interact with each PD in accordance with the IEEE 802.3af standard. In particular, the PSE 12 and the PD participate in the PD detection procedure, during which the PSE 12 probes a link to detect the PD. If the PD is detected, the PSE 12 checks the PD detection signature to determine whether it is valid or non-valid. The valid and non-valid detection signatures are defined in the IEEE 802.3af standard. While the valid PD detection signature indicates that the PD is in a state where it will accept power, the non-valid PD detection signature indicates that the PD is in a state where it will not accept power.

If the signature is, valid, the PD has an option of presenting a classification signature to the PSE to indicate how much power it will draw when powered up. Based on the determined class of the PD, the PSE allocates the required power to the PD and powers up the PD.

In a conventional PoE system, the PD requests power corresponding to its peak power usage to support its operation under worst case conditions. The PSE keeps track of power allocated to all PDs. For the most robust operation, the PSE should reserve the peak power for each PD that it powers up. This power allocation scheme is static. The power is allocated to each PD only once at power-up. However, power available to support operations of the PDs is limited. The PSE will deny request for power from an additional PD if the available power is not sufficient to support its peak power usage.

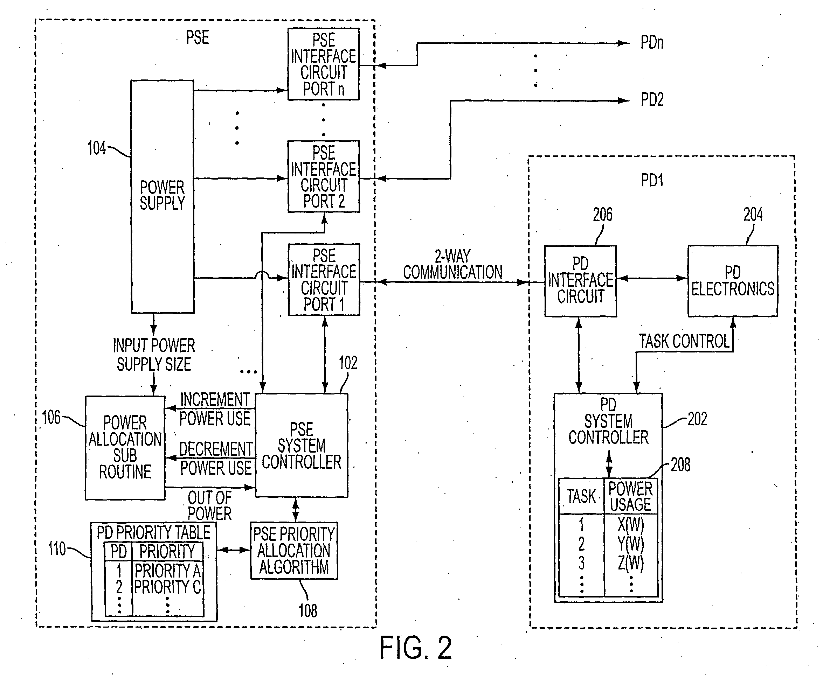

In accordance with the present disclosure, the PSE 12 may utilize a dynamic power allocation scheme to dynamically modify power allocated to the PD in accordance with tasks performed by the PD. Referring to FIG. 2, a dynamic power allocation mechanism 100 of the present disclosure employs a PSE system controller 102 that controls ports 1, 2,..., n of a PSE interface circuit to supply power from a power supply 104 to PDs 1, 2..., n linked to the respective ports. The dynamic power allocation mechanism 100 involves a power allocation sub routine 106, a PSE priority allocation algorithm 108, and a PD priority table 110. The dynamic power allocation mechanism 100 may be implemented in the PSE 12 or in a processing device arranged outside the PSE 12.

As discussed in more detail later, the power allocation sub routine 106 controls allocation of power to each of the PDs in the PoE system. The PSE priority allocation algorithm 108 controls allocation of priority to each of the PDs. The PD priority table 110 may contain a list of priorities assigned to the PDs.

Each of the PDs may include a PD system controller 202 that controls operation of the respective PD, PD electronics 204 for carrying out tasks that may be performed by the PD, and a PD interface circuit 206 linked to the respective PSE interface port to support interaction between the PD and the PSE 12. The PD system controller 202 has access to a power usage table 208 that lists tasks executable by the PD, and the power usage associated with each task. Alternatively, the table 208 may contain information on current consumption associated with each of the task, in addition to or instead of the power usage information.

A data exchange protocol may be established between the PSE 12 and the respective PD to support the dynamic power allocation mechanism 100. For example, a two-way communication may be provided between the PSE interface port and the interface circuit of the respective PD. While power from the PSE 12 to PDs is provided over the physical layer of the Ethernet network linking the PSE 12 and the PDs, a data exchange between the PSE 12 and the PDs to support the dynamic power allocation mechanism 100 may be carried out over the link layer of the Ethernet network above the physical layer. For example, Link Layer Discovery Protocol (LLDP) ratified as IEEE standard 802.1AB-2005 may be employed to support the dynamic power allocation mechanism 100. LLDP is a neighbor discovery protocol. It allows Ethernet network devices to advertise information about themselves to other nodes on the network and store the information they discover.

In particular, LLDP may be used to define a set of common messages for the PSE and PDs. These messages may be transmitted between the PSE and PDs in accordance with LLDP. In particular, LLDP messages may convey information required to support the dynamic power allocation mechanism 100. Multiple LLDP messages may be transmitted in one LAN packet in the form of a type length value (TLV) field. As defined by the LLDP, the received messages may be stored in Management Information Base (MIB) arranged in accordance with IEEE-defined Simple Network Management Protocol (SNMP).

Alternatively, the communication between the PSE and the PDs may be provided over the physical layer. For example, parameters of signals involved in the PoE protocol may be modulated to transmit required information between the PSE and the PD. Examples of data communication between the PSE and the PD are described in US2006/0168459 filed on November 15, 2005, entitled "PROVIDING DATA COMMUNICATION BETWEEN POWER SUPPLY DEVICE AND POWERED DEVICE IN SYSTEM FOR SUPPLYING POWER OVER COMMUNICATION LINK" and assigned to Linear Technology Corporation, the assignee of the present application.

As PD power consumption is a function of tasks performed by the PD, the dynamic power allocation scheme of the present disclosure provides dynamic modification of power allocated to PDs based on the performed tasks. Interaction between the PSE 12 and the PD to implement the dynamic power allocation scheme may be performed in a number of different ways. For example, after a particular PD is powered up, it may dynamically modify its requests for power in accordance with tasks being performed. As the PD switches from one task to another, the PD system controller 202 may access the power usage table 208 to obtain information on the power usage associated with the new task. Based on the power usage information, the PD system controller 202 generates a request for a new power level to support the new task.

Via the respective PSE port, the PD power request is transmitted to the PSE system controller 102 that controls the power allocation subroutine 106 to change the power allocated to the requesting PD based on the PD's request. In particular, the PSE system controller 102 may issue INCREMENT POWER USE command if the current power allocated to the PD is lower than the requested power. Alternatively, the PSE system controller 102 may issue DECREMENT POWER USE command if the currently allocated power is higher than the requested power.

The power allocation subroutine 106 receives an INPUT POWER SUPPLY SIZE signal from the power supply 104 indicating the amount of currently available power. If the available power is sufficient to increase the power allocated to the requesting PD, the power allocation subroutine 106 grants the PD's request for a higher power level. In response to this request, the PSE 12 raises power provided to the PD to the requested level. When the power is increased, the PD may acknowledge an increased power level.

However, if the available power is not sufficient to satisfy the PD's request, the power allocation subroutine 106 may respond with an OUT OF POWER signal to indicate that the PD's request is denied. The PD may repeat its request later to check whether an increased power level is available.

If the currently allocated power is higher than the power level requested by the PD, the power allocation subroutine 106 grants the PD's request and enables the PSE 12 to reduce power provided to the PD to the requested level.

Hence, the power allocated to a PD by the PSE 12 would be modified as the PD changes tasks being performed. For example, when a PD becomes idle, it would likely have a lower power consumption. When the PD notifies the PSE 12 that it is idle and requires a reduced power level, the PSE 12 is able to reallocate power, that previously was allocated to that PD, to other PDs. As a result, the PSE 12 is able to better manage the power allocation to a set of PDs.

Further, the dynamic power allocation mechanism 100 may enable the PSE 12 to recall or reduce the power allocated to a particular PD in case of power shortage. For example, When the PSE system controller 102 receives the OUT OF POWER signal from the power allocation subroutine 106 indicating that the power available from the power supply 104 is not sufficient, the PSE system controller 102 may notify any PD currently provided with power that there is a power shortage and the PD must reduce its power consumption. The power released after reducing the power level to that PD may be reallocated to another PD.

The PD may request the PSE 12 not to reduce its allocated power below a certain minimum level that may correspond to a power usage required to support operations performed to prevent the PD from being damaged. For example, the PD may indicate the power level required to keep its memory alive and support minimum functions. In response to this request, the power allocation subroutine 106 prevents the power allocated to that PD from being reduced below the requested minimum level.

To enable the PSE 12 to efficiently reallocate power among a set of PDs, the dynamic power allocation mechanism 100 may employ a PD priority scheme. The PSE system controller 102 may use the PSE priority allocation algorithm 108 to assign priorities to each PD linked to the PSE 12. A priority may be assigned to a PD at its initial power-up and recorded in the PD priority table 110. As the power available from the power supply 104 becomes restricted, the PSE system controller 102 may remove or reduce power allocated to a lower-priority PD in order to grant a request for power from a higher-priority PD. Also, the priority scheme enables the PSE 12 to reduce or remove power allocated to a lower-priority PD before reducing or removing power allocated to a higher-priority PD.

The PSE priority allocation algorithm 108 may dynamically change the priority of a PD along with a power request from that PD. Hence, the priority of a PD may be changed when that PD switches from one task to another. For example, a high priority may be assigned to a PD supplied with the minimum level of power required to prevent that PD from being damaged. As the PD requests a higher power level, the PSE 12 may assign a lower priority to that PD because the additional power may be needed for supporting optional features that are not required to perform essential operations. When the PD returns to performing essential functions, the PSE 12 may assign a higher priority to that PD to guarantee allocation of the required power level.

The dynamic power allocation mechanism 100 is able to support high-power PDs that may require more power than available in accordance with the IEEE 802.3af standard. For example, a PD may be powered up in a IEEE 802.3af standard-compliant mode. Thereafter, it may request a higher power level. If the PSE supports a higher-power mode and a sufficient amount of power is available, the PSE may grant the PD's request for higher power. If not, the PD may continue to operate in the IEEE 802.3af standard-compliant mode. The PD may request a higher power level at a later time to check whether the higher power level is available.

The dynamic power allocation scheme described in the present disclosure allows PDs to request power allocation based on their tasks. As one skilled in the art would understand, this scheme would also allow PDs to request current allocation based on their tasks. In this case, the PD table 108 may store a current consumption amount associated with each PD task. When a PD switches from one task to another task, it may request the PSE to change the existing current allocation to supply the PD with current required to perform the new task.

The foregoing description illustrates and describes aspects of the present invention. Additionally, the disclosure shows and describes only preferred embodiments, but as aforementioned, it is to be understood that the invention is capable of use in various other combinations, modifications, and environments and is capable of changes or modifications within the scope of the inventive concept as expressed herein, commensurate with the above teachings, and/or the skill or knowledge of the relevant art.

The embodiments described hereinabove are further intended to explain best modes known of practicing the invention and to enable others skilled in the art to utilize the invention in such, or other, embodiments and with the various modifications required by the particular applications or uses of the invention.

Accordingly, the description is not intended to limit the invention to the embodiments disclosed herein. Also, it is intended that the appended claims be construed to include alternative embodiments.

## Claims

1. A system for supplying power over a communication link, comprising:
a power supply device (12) for providing power to a powered device, PD;
a dynamic power allocation mechanism (100) for dynamically modifying power allocated to the PD in accordance with tasks of the PD;
a data exchange protocol being established between the power supply device (12) and the PD to support the dynamic power allocation mechanism (100); and
a data exchange between the power supply device (12) and the PD to support the dynamic power allocation mechanism (100) being carried out over a link layer of a data network above a physical layer, over which the power being provided from the power supply device (12) to the PD.

2. The system of claim 1, wherein the power supply device is configured to provide power over Ethernet.

3. The system of claim 1, wherein the dynamic power allocation mechanism (100) is configured to reduce power allocated to the PD when the PD switches to a first task associated with a decrease in power consumption, and to increase power allocated to the PD when the PD switches to a second task associated with an increase in power consumption.

4. The system of claim 1 , wherein the dynamic power allocation mechanism (100) is configured to prevent power allocated to the PD from being reduced below a minimum power level requested by the PD.

5. The system of claim 1, wherein the power supply device (12) is configured to provide power to multiple power devices, PDs, and the dynamic power allocation mechanism (100) is configured to modify power allocated to the PDs based on tasks of the respective PDs.

6. The system of claim 5, wherein the dynamic power allocation mechanism (100) is configured to modify power allocated to a PD of the multiple PDs when the PD changes a task being performed.

7. The system of claim 6, wherein the dynamic power allocation mechanism (100) is configured to reduce power allocated to a first PD of the multiple PDs when the first PD switches to a first task associated with a decrease in power consumption, and to increase power to a second PD of the multiple PDs when the second PD switches to a second task associated with an increase in power consumption.

8. The system of claim 6, wherein the dynamic power allocation mechanism (100) is configured to reallocate power from a first PD to a second PD.

9. The system of claim 5, wherein the dynamic power allocation mechanism (100) is configured to reduce power allocated to at least one of the multiple PDs if a power shortage is detected.

10. The system of claim 5, further comprising a priority mechanism (100) for assigning priorities to the PDs.

11. The system of claim 10, wherein the dynamic power allocation mechanism (100) is configured for reducing power allocated to a lower-priority PD before reducing power allocated to a higher-priority PD if a power shortage is detected.

12. The system of claim 10, wherein the dynamic power allocation mechanism (100) is configured for reducing power allocated to a lower-priority PD to satisfy power demand from a higher-priority PD if a power shortage is detected.

13. The system of claim 10, wherein the priority mechanism is configured for dynamically changing priorities assigned to the PDs during operations of the PDs.

14. The system of claim 13, wherein the priority mechanism is configured for dynamically changing priorities assigned to the PDs in accordance with tasks of the PDs.

15. The system of claim 1, further comprising a task keeping mechanism configured for maintaining information on tasks to be performed by the PD.

16. The system of claim 15, wherein the task keeping mechanism is configured to maintain information on power consumption associated with each of the tasks.

17. The system of claim 15, wherein the task keeping mechanism is configured to maintain information on current consumption associated with each of the tasks.

18. The system of claim 1, wherein the communication link is cabling for connecting a network node of a local area network to a hub of the local real network,
the hub having the power supply device (12) and the dynamic power allocation mechanism (100).

19. The system of claim 18, wherein the dynamic power allocation mechanism (100) is configured to modify power allocation in response to information transferred over a link layer of the local area network.

20. The system of claim 19, wherein the power supply device (12) is configured for providing power to multiple PDs, and the dynamic power allocation mechanism (100) is configured to change power allocated to at least one of the PDs in response to a change in an operation performed by said at least one of the PDs changes.

21. A method of providing power to a powered device, PD, over an Ethernet link, comprising the steps of:
allocating power to the PD;
delivering the allocated power from a power supply device (12) to the PD; and
changing a value of the allocated power when the PD switches from a first task to a second task, wherein the step of changing a value includes:
establishing a data exchange protocol between the power supply device (12) and the PD to support dynamic power allocation; and
carrying out a data exchange between the power supply device (12) and the PD to support the dynamic power allocation over a link layer of an Ethernet network above a physical layer, over which the power being provided from the power supply device (12) to the PD.

22. The method of claim 21, wherein first and second PDs are respectively provided with power over first and second Ethernet links from the same power source.

23. The method of claim 22, wherein power allocated to the first PD is reduced to satisfy power demand of the second PD if a power shortage is detected.

24. The method of claim 23, wherein power allocated to the first PD is prevented from being reduced below a minimum power level requested by the first PD.

25. The method of claim 22, wherein power allocated to the first and second PDs is dynamically modified in accordance with respective priorities assigned to the first and second PDs.

26. The method of claim 22, wherein in response to detection of a power shortage, power allocated to the first PD is reduced before reducing power allocated to the second PD if a priority of the first PD is lower than a priority of the second PD.

27. The method of claim 22, wherein in response to detection of a power shortage, power allocated to the first PD is reduced to satisfy power demand from the second PD if a priority of the first PD is lower than a priority of the second PD.

## Patentansprüche

1. System zum Liefern von Leistung über eine Kommunikationsverbindung, umfassend:
eine Leistungsversorgungsvorrichtung (12) zum Bereitstellen von Leistung an eine angetriebene Vorrichtung, PD;
ein Dynamische-Leistungszuteilung-Mechanismus (100) zum dynamischen Modifizieren von Leistung, die der PD gemäß Aufgaben der PD zugeteilt wird;
ein Datenaustauschprotokoll, das zwischen der Leistungsversorgungsvorrichtung (12) und der PD hergestellt wird, um den Dynamische-Leistungszuteilung-Mechanismus (100) zu unterstützen; und
einen Datenaustausch zwischen der Leistungsversorgungsvorrichtung (12) und der PD, um den Dynamische-Leistungszuteilung-Mechanismus (100) zu unterstützen, der über eine Verbindungsschicht eines Datennetzwerks über einer physikalischen Schicht ausgeführt wird, über die bzw. den die Leistung von der Leistungsversorgungsvorrichtung (12) an die PD bereitgestellt wird.

2. System nach Anspruch 1, wobei die Leistungsversorgungsvorrichtung konfiguriert ist, Leistung über das Ethernet bereitzustellen.

3. System nach Anspruch 1, wobei der Dynamische-LeistungszuteilungMechanismus (100) konfiguriert ist, Leistung, die der PD zugeteilt wird, zu verringern, wenn die PD zu einer ersten Aufgabe schaltet, die mit einer Abnahme des Leistungsverbrauchs assoziiert bzw. verknüpft ist, und Leistung, die der PD zugeteilt wird, zu erhöhen, wenn die PD zu einer zweiten Aufgabe schaltet, die mit einer Zunahme des Leistungsverbrauchs assoziiert bzw. verknüpft ist.

4. System nach Anspruch 1, wobei der Dynamische-Leistungszuteilung-Mechanismus (100) konfiguriert ist zu verhindern, dass Leistung, die der PD zugeteilt wird, unter einen Mindestleistungspegel verringert wird, der von der PD gefordert wird.

5. System nach Anspruch 1, wobei die Leistungsversorgungsvorrichtung (12) konfiguriert ist, Leistung an mehrere angetriebene Vorrichtungen, PDs, bereitzustellen, und der Dynamische-Leistungszuteilung-Mechanismus (100) konfiguriert ist, Leistung zu modifizieren, die den PDs basierend auf Aufgaben der jeweiligen PDs zugeteilt wird.

6. System nach Anspruch 5, wobei der Dynamische-Leistungszuteilung-Mechanismus (100) konfiguriert ist, Leistung, die einer PD der mehreren PDs zugeteilt wird, zu modifizieren, wenn die PD eine Aufgabe ändert, die ausgeführt wird.

7. System nach Anspruch 6, wobei der Dynamische-Leistungszuteilung-Mechanismus (100) konfiguriert ist, Leistung, die einer ersten PD der mehreren PDs zugeteilt wird, zu verringern, wenn die erste PD zu einer ersten Aufgabe schaltet, die mit einer Abnahme des Leistungsverbrauchs assoziiert bzw. verknüpft ist, und Leistung an eine zweite PD der mehreren PDs zu erhöhen, wenn die zweite PD zu einer zweiten Aufgabe schaltet, die mit einer Zunahme des Leistungsverbrauchs assoziiert bzw. verknüpft ist.

8. System nach Anspruch 6, wobei der Dynamische-LeistungszuteilungMechanismus (100) konfiguriert ist, Leistung von einer ersten PD an eine zweite PD neu zuzuteilen bzw. umzuverteilen.

9. System nach Anspruch 5, wobei der Dynamische-Leistungszuteilung-Mechanismus (100) konfiguriert ist, Leistung, die der zumindest einen der mehreren PDs zugeteilt wird, zu verringern, wenn eine Leistungsknappheit detektiert wird.

10. System nach Anspruch 5, ferner umfassend einen Prioritätsmechanismus (100) zum Zuweisen von Prioritäten an die PDs.

11. System nach Anspruch 10, wobei der Dynamische-Leistungszuteilung-Mechanismus (100) konfiguriert ist Leistung, die einer PD mit niedrigerer Priorität zugeteilt wird, zu verringern bevor er die Leistung, die einer PD mit höherer Priorität zugeteilt wird, verringert, wenn eine Leistungsknappheit detektiert wird.

12. System nach Anspruch 10, wobei der Dynamische-Leistungszuteilung-Mechanismus (100) konfiguriert ist Leistung, die einer PD mit niedrigerer Priorität zugeteilt wird, zu verringern, um den Leistungsbedarf von einer PD mit höherer Priorität zu decken, wenn eine Leistungsknappheit detektiert wird.

13. System nach Anspruch 10, wobei der Prioritätsmechanismus konfiguriert ist zum dynamischen Ändern von Prioritäten, die den PDs während Operationen der PDs zugeteilt werden.

14. System nach Anspruch 13, wobei der Prioritätsmechanismus konfiguriert ist zum dynamischen Ändern von Prioritäten, die den PDs gemäß Aufgaben der PDs zugeteilt werden.

15. System nach Anspruch 1, ferner umfassend einen Aufgabenbehaltemechanismus, der konfiguriert ist zum Beibehalten von Informationen über Aufgaben, die von der PD durchzuführen sind.

16. System nach Anspruch 15, wobei der Aufgabenbehaltemechanismus konfiguriert ist, Informationen über einen Leistungsverbrauch beizubehalten, der mit jeder der Aufgaben assoziiert bzw. verknüpft ist.

17. System nach Anspruch 15, wobei der Aufgabenbehaltemechanismus konfiguriert ist, Informationen über einen Stromverbrauch beizubehalten, der mit jeder der Aufgaben assoziiert bzw. verknüpft ist.

18. System nach Anspruch 1, wobei die Kommunikationsverbindung eine Verkabelung zum Verbinden eines Netzwerkknotens eines Local Area Network mit einem Hub des Local Real Network ist,
wobei der Hub die Leistungsversorgungsvorrichtung (12) und den Dynamische-Leistungszuteilung-Mechanismus (100) aufweist.

19. System nach Anspruch 18, wobei der Dynamische-Leistungszuteilung-Mechanismus (100) konfiguriert ist, eine Leistungszuteilung ansprechend auf Informationen zu modifizieren, die über eine Verbindungsschicht des Local Area Network übertragen werden.

20. System nach Anspruch 19, wobei die Leistungsversorgungsvorrichtung (12) konfiguriert ist zum Bereitstellen von Leistung an mehrere PDs, und der Dynamische-Leistungszuteilung-Mechanismus (100) konfiguriert ist, die Leistung, die an zumindest eine der PDs zugeteilt wird, ansprechend auf eine Änderung einer Operation zu ändern, die von der zumindest einen der PDs durchgeführt wird.

21. Verfahren zum Bereitstellen von Leistung an eine angetriebene Vorrichtung, PD, über eine Ethernetverbindung, umfassend die Schritte:
Zuteilung von Leistung an die PD;
Liefern der zugeteilten Leistung von einer Leistungsversorgungsvorrichtung (12) an die PD; und
Ändern eines Werts der zugeteilten Leistung, wenn die PD von einer ersten Aufgabe zu einer zweiten Aufgabe wechselt, wobei der Schritt des Änderns eines Werts beinhaltet:
Herstellen eines Datenaustauschprotokolls zwischen der Leistungsversorgungsvorrichtung (12) und der PD, um eine dynamische Leistungszuteilung zu unterstützen; und
Durchführen eines Datenaustauschs zwischen der Leistungsversorgungsvorrichtung (12) und der PD, um die dynamische Leistungszuteilung zu unterstützen, und zwar über eine Verbindungsschicht eines Ethernetnetzwerks über einer physikalischen Schicht, über die bzw. den die Leistung von der Leistungsversorgungsvorrichtung (12) an die PD bereitgestellt wird.

22. Verfahren nach Anspruch 21, wobei eine erste und eine zweite PD jeweils über eine erste und eine zweite Ethernetverbindung von derselben Leistungsquelle mit Leistung versorgt werden.

23. Verfahren nach Anspruch 22, wobei Leistung, die der ersten PD zugeteilt wird, verringert wird, um den Leistungsbedarf der zweiten PD zu decken, wenn eine Leistungsknappheit detektiert wird.

24. Verfahren nach Anspruch 23, wobei verhindert wird, dass Leistung, die der ersten PD zugeteilt wird, unter einen Mindestleistungspegel verringert wird, der von der PD gefordert wird.

25. Verfahren nach Anspruch 22, wobei Leistung, die der ersten und der zweiten PD zugeteilt wird, gemäß jeweiligen Prioritäten, die der ersten und der zweiten PD zugewiesen werden, dynamisch modifiziert wird.

26. Verfahren nach Anspruch 22, wobei ansprechend auf eine Detektion einer Leistungsknappheit Leistung, die der ersten PD zugeteilt wird, verringert wird, bevor Leistung, die der zweiten PD zugeteilt wird, verringert wird, wenn eine Priorität der ersten PD niedriger ist als eine Priorität der zweiten PD.

27. Verfahren nach Anspruch 22, wobei ansprechend auf eine Detektion einer Leistungsknappheit Leistung, die der ersten PD zugeteilt wird, verringert wird, um den Leistungsbedarf von der zweiten PD zu decken, wenn eine Priorität der ersten PD niedriger ist als eine Priorität der zweiten PD.

## Revendications

1. Système d'alimentation électrique sur une liaison de communication, comprenant :
un dispositif d'alimentation électrique (12) pour fournir de la puissance à un dispositif alimenté, PD ;
un mécanisme d'affectation de puissance dynamique (100) pour modifier dynamiquement la puissance affectée au PD conformément à des tâches du PD ;
un protocole d'échange de données étant établi entre le dispositif d'alimentation électrique (12) et le PD pour supporter le mécanisme d'affectation de puissance dynamique (100) ; et
un échange de données entre le dispositif d'alimentation électrique (12) et le PD pour supporter le mécanisme d'affectation de puissance dynamique (100) étant effectué sur une couche de liaison d'un réseau de données au-dessus d'une couche physique sur laquelle la puissance est fournie du dispositif d'alimentation électrique (12) au PD.

2. Système selon la revendication 1, dans lequel le dispositif d'alimentation électrique est configuré pour fournir de la puissance sur Ethernet.

3. Système selon la revendication 1, dans lequel le mécanisme d'affectation de puissance dynamique (100) est configuré pour réduire la puissance affectée au PD lorsque le PD passe à une première tâche associée à une diminution de consommation électrique et pour augmenter la puissance affectée au PD lorsque le PD passe à une seconde tâche associée à une augmentation de consommation électrique.

4. Système selon la revendication 1, dans lequel le mécanisme d'affectation de puissance dynamique (100) est configuré pour empêcher la réduction de la puissance affectée au PD en dessous d'un niveau de puissance minimum requis par le PD.

5. Système selon la revendication 1, dans lequel le dispositif d'alimentation électrique (12) est configuré pour fournir de la puissance à de multiples dispositifs alimentés, PD, et le mécanisme d'affectation de puissance dynamique (100) est configuré pour modifier la puissance affectée aux PD en fonction de tâches des PD respectifs.

6. Système selon la revendication 5, dans lequel le mécanisme d'affectation de puissance dynamique (100) est configuré pour modifier la puissance affectée à un PD des multiples PD lorsque le PD change une tâche qui est réalisée.

7. Système selon la revendication 6, dans lequel le mécanisme d'affectation de puissance dynamique (100) est configuré pour réduire la puissance affectée à un premier PD des multiples PD lorsque le premier PD passe à une première tâche associée à une diminution de consommation électrique et pour augmenter la puissance à un second PD des multiples PD lorsque le second PD passe à une seconde tâche associée à une augmentation de consommation électrique.

8. Système selon la revendication 6, dans lequel le mécanisme d'affectation de puissance dynamique (100) est configuré pour réaffecter de la puissance d'un premier PD à un second PD.

9. Système selon la revendication 5, dans lequel le mécanisme d'affectation de puissance dynamique (100) est configuré pour réduire la puissance affectée à au moins un des multiples PD si un manque de puissance est détecté.

10. Système selon la revendication 5, comprenant en outre un mécanisme de priorité (100) pour attribuer des priorités aux PD.

11. Système selon la revendication 10, dans lequel le mécanisme d'affectation de puissance dynamique (100) est configuré pour réduire la puissance affectée à un PD de priorité inférieure avant de réduire la puissance affectée à un PD de priorité supérieure si un manque de puissance est détecté.

12. Système selon la revendication 10, dans lequel le mécanisme d'affectation de puissance dynamique (100) est configuré pour réduire la puissance affectée à un PD de priorité inférieure afin de satisfaire la demande de puissance d'un PD de priorité supérieure si un manque de puissance est détecté.

13. Système selon la revendication 10, dans lequel le mécanisme de priorité est configuré pour changer dynamiquement des priorités attribuées aux PD au cours d'opérations des PD.

14. Système selon la revendication 13, dans lequel le mécanisme de priorité est configuré pour changer dynamiquement des priorités attribuées aux PD conformément à des tâches des PD.

15. Système selon la revendication 1, comprenant en outre un mécanisme de gestion de tâches configuré pour maintenir des informations sur des tâches devant être réalisées par le PD.

16. Système selon la revendication 15, dans lequel le mécanisme de gestion de tâches est configuré pour maintenir des informations sur la consommation électrique associée à chacune des tâches.

17. Système selon la revendication 15, dans lequel le mécanisme de gestion de tâches est configuré pour maintenir des informations sur la consommation de courant associée à chacune des tâches.

18. Système selon la revendication 1, dans lequel la liaison de communication est du câblage pour connecter un noeud de réseau d'un réseau local à un concentrateur du réseau local,
le concentrateur ayant le dispositif d'alimentation électrique (12) et le mécanisme d'affectation de puissance dynamique (100).

19. Système selon la revendication 18, dans lequel le mécanisme d'affectation de puissance dynamique (100) est configuré pour modifier l'affectation de puissance en réponse à des informations transférées sur une couche de liaison du réseau local.

20. Système selon la revendication 19, dans lequel le dispositif d'alimentation électrique (12) est configuré pour fournir de la puissance à de multiples PD et le mécanisme d'affectation de puissance dynamique (100) est configuré pour changer la puissance affectée à au moins un des PD en réponse à un changement d'une opération réalisée par ledit au moins un des changements de PD.

21. Procédé de fourniture de puissance à un dispositif alimenté, PD, sur une liaison Ethernet, comprenant les étapes consistant à :
affecter de la puissance au PD ;
livrer la puissance affectée d'un dispositif d'alimentation électrique (12) au PD ; et
changer une valeur de la puissance affectée lorsque le PD passe d'une première tâche à une seconde tâche, dans lequel l'étape de changement de valeur inclut :
établir un protocole d'échange de données entre le dispositif d'alimentation électrique (12) et le PD pour supporter l'affectation de puissance dynamique ; et
effectuer un échange de données entre le dispositif d'alimentation électrique (12) et le PD pour supporter l'affectation de puissance dynamique sur une couche de liaison d'un réseau Ethernet au-dessus d'une couche physique sur laquelle la puissance est fournie du dispositif d'alimentation électrique (12) au PD.

22. Procédé selon la revendication 21, dans lequel des premier et second PD sont respectivement fournis en puissance sur des première et seconde liaisons Ethernet provenant de la même source électrique.

23. Procédé selon la revendication 22, dans lequel la puissance affectée au premier PD est réduite pour satisfaire la demande de puissance du second PD si un manque de puissance est détecté.

24. Procédé selon la revendication 23, dans lequel la puissance affectée au premier PD est empêchée d'être réduite en dessous d'un niveau de puissance minimum requis par le premier PD.

25. Procédé selon la revendication 22, dans lequel la puissance affectée aux premier et second PD est modifiée dynamiquement conformément à des priorités respectives attribuées aux premier et second PD.

26. Procédé selon la revendication 22, dans lequel, en réponse à la détection d'un manque de puissance, la puissance affectée au premier PD est réduite avant de réduire la puissance affectée au second PD si une priorité du premier PD est inférieure à une priorité du second PD.

27. Procédé selon la revendication 22, dans lequel, en réponse à la détection d'un manque de puissance, la puissance affectée au premier PD est réduite pour satisfaire la demande de puissance du second PD si une priorité du premier PD est inférieure à une priorité du second PD.
